Europäisches Patentamt

(19) European Patent Office

Office européen des brevets

(11) **EP 0 991 988 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(21) Anmeldenummer: **98938677.6**

(22) Anmeldetag: **30.06.1998**

(51) Int Cl.[7]: **G05D 23/19**

(86) Internationale Anmeldenummer:
**PCT/EP1998/003989**

(87) Internationale Veröffentlichungsnummer:
**WO 1999/001807 (14.01.1999 Gazette 1999/02)**

(54) **SCHALTERELEMENT UND VERFAHREN ZU SEINER STEUERUNG**

SWITCHING ELEMENT AND A METHOD FOR THE CONTROL THEREOF

ELEMENT DE COMMUTATION ET PROCEDE PERMETTANT D'EN ASSURER LA COMMANDE

(84) Benannte Vertragsstaaten:
**AT BE CH CY DE DK ES FI FR GB GR IE IT LI LU MC NL PT SE**

(30) Priorität: **01.07.1997 DE 19728066**

(43) Veröffentlichungstag der Anmeldung:
**12.04.2000 Patentblatt 2000/15**

(73) Patentinhaber: **Nitsche, Thomas**
**81679 München (DE)**

(72) Erfinder: **Nitsche, Thomas**
**81679 München (DE)**

(74) Vertreter: **Kudlek, Franz Thomas et al**
**Hössle Kudlek & Partner**
**Patentanwälte**
**Postfach 10 23 38**
**70019 Stuttgart (DE)**

(56) Entgegenhaltungen:
**EP-A- 0 631 219**      **WO-A-95/07500**
**WO-A-97/06542**      **WO-A-97/44720**
**DE-A- 3 121 596**      **DE-A- 19 600 694**

EP 0 991 988 B1

**Beschreibung**

Die vorliegende Erfindung betrifft ein Schalterelement, welches zur Steuerung einer Zielgröße beispielsweise eines elektrisch angetriebenen Gerätes verwendet werden kann, sowie ein Verfahren zu seiner Steuerung. Beispielhaft seien genannt Schalterelemente zur Steuerung von Lichtschaltern, Alarmanlagen oder anderen Haushaltsgeräten, wie beispielsweise Kaffeemaschinen oder Geräten der Unterhaltungselektronik. Auch die Steuerung von Waschmaschinen, Computern oder Mikromaschinen ist mit dem erfindungsgemäßen Schalterelement vorteilhaft durchführbar.

Es sind Zeitschaltuhren bekannt, welche vom Benutzer jedoch eine aufwendige Programmierarbeit erfordern. Man stellt fest, daß der Programmieraufwand bei vielen Haushaltsgeräten für den durchschnittlichen Benutzer zu groß ist, so daß die Möglichkeiten eines programmierbaren Gerätes nicht voll ausgenutzt werden.

Aus der EP 0 581 555 A1 ist eine programmierbare Schaltereinheit bekannt, wobei die Einheit zwischen einem Lernmodus, in dem eine Tabelle mit Ein- bzw. Aus-Zuständen des zu steuernden Gerätes über einen bestimmten Zeitraum, und einem zweiten, automatischen Modus hin- und herschaltbar ist. Durch logische Kombination der gespeicherten Schalterdaten wird hierbei eine Sequenz von Schaltvorgängen generiert, welche dem bisherigen Schaltverhalten entspricht. Hierdurch ist es möglich, auch in Abwesenheit des Benutzers den normalen Betrieb des Schalters zu simulieren. Eine beispielhafte Anwendung dieses Schalterelements ist die Simulation des An- und Ausschaltens von Lichtern in einem Haus, um das Haus nach außen bewohnt erscheinen zu lassen.

Ein derartiges Schalterelement ist jedoch lediglich in der Lage, die Schaltvorgänge in Abhängigkeit von Zeiteingaben zu simulieren bzw. zu steuern. Das Simulieren einer zu schaltenden Zielgröße, deren Wert von äußeren Einflüssen abhängt, ist mit einem derartigen Schalter nicht realisierbar. Als Beispiel sei die Steuerung einer Bewässerungsanlage angegeben. Eine derartige Anlage wird typischerweise in Abhängigkeit von der Luftfeuchtigkeit, der Feuchtigkeit des Bodens, der Helligkeit sowie der Tageszeit betätigt. Ein wie oben beschriebenes Schalterelement wäre nicht in der Lage, eine geeignete Steuerung einer derartigen Bewässerungsanlage durchzuführen.

Aus der US 5,608,843 ist eine Schalteinheit bekannt, die zu Lernzwecken eine Schätzfunktion generieren kann.

Ferner beschreibt die DE 295 01 306 eine automatische, mittels einer Neuro-Fuzzy-Logik arbeitende Schalteinheit, die manuell und auch durch Sensorsignale beeinflußt automatisch betrieben werden kann.

Aus der WO 95/07500 ist ferner ein Verfahren zur Minimierung des Energieverbrauchs einer mit einer Steuervorrichtung gesteuerten elektrischen Last bekannt. Hierbei werden mindestens eine primäre Messgröße und mindestens eine sekundäre Messgröße verarbeitet, wobei mindestens eine dieser Messgrößen durch den Benutzer beeinflusst werden kann. Unter Mitwirkung von Sollgrößen werden die Messgrößen weiterverarbeitet. In einem Speicher kann in diesem Zusammenhang anfallende Information gespeichert werden. Die Messwerte werden unter Mitwirkung von derart gespeicherter Information so weiterverarbeitet, dass damit eine primäre Sollgröße an individuelle Verhältnisse angepasst werden kann. Im weiteren wird anhand der Messgrößen, der Sollgrößen und der gespeicherten Information eine Steuergröße zur Steuerung der Last ermittelt.

Aufgabe der Erfindung ist die Schaffung eines Schalterelements, mit dem in einfacher Weise mittels Schaltanweisungen die Steuerung einer Zielgröße in Abhängigkeit von äußeren Einflußgrößen durchgeführt werden kann.

Diese Aufgabe wird gelöst durch ein Schalterelement mit den Merkmalen des Patentanspruches 1 und ein Verfahren mit den Merkmalen des Patentanspruchs 6.

Mit dem erfindungsgemäßen Schalterelement ist es nun erstmals möglich, aufgrund extern, beispielsweise manuell, eingegebener Schaltanweisungen zur Steuerung einer Zielgröße eine Schätzfunktion zur Darstellung der Zielgröße in Abhängigkeit von den Einflußgrößen der Zielgröße zu berechnen. Hierbei merkt sich eine Gedächtniseinheit des Schalterelements während einer Lernphase die Werte der Einflußgrößen bei einer Eingabe einer Schaltanweisung. Wenn eine ausreichende statistische Basis erstellt ist, kann die Schätzfunktion mit ausreichender Genauigkeit zur Simulierung des bisherigen Schaltverfahrens generiert werden. Nach Generierung einer derartigen Schätzfunktion kann das Schalterelement intern Schaltanweisungen zur Steuerung der Zielgröße erzeugen. Dies sei wiederum am obigen Beispiel einer Bewässerungsanlage erläutert. Ein Benutzer gibt während der Lernphase je nach Bedarf Anweisungen zum Ein- bzw. Ausschalten der Anlage. Diese Schaltanweisungen erfolgen unter gewissen äußeren Bedingungen, beispielsweise einer bestimmten Luftfeuchtigkeit, einer bestimmten Bodenfeuchtigkeit und einer bestimmten Helligkeit. Die Werte dieser sogenannten Einflußgrößen werden von Sensoren festgestellt, und dem Schalterelement übermittelt. Für jede An- bzw. Aus-Anweisung wird in einer Speichereinheit ein Wertetupel bestehend aus der Ein- oder Ausgabeanweisung und den jeweiligen Werten der Einflußgrößen gespeichert. Mittels geeigneter mathematischer Verfahren wird, wenn eine genügende Anzahl derartiger Tupel vorliegt, eine Schätzfunktion erstellt. Nach Umschalten des Schalterelements von der Lernphase auf eine automatische Phase ist das Schalterelement dann in der Lage, selbständig Ein- bzw. Aus-Anweisungen zu generieren. Während des automatischen Betriebszustandes werden in regelmäßigen Abständen die entsprechenden Sensorwerte ermittelt und ausgewertet. Entsprechend den ermittelten Einflußgrößen, welche Variable der von ihnen abhängigen Schätzfunktion darstellen, wird der Wert der Schätzfunktion ermittelt. Es ist möglich, z.B. eine der Einflußgrößen als Rückkopplungsgröße zu verwenden.

Eine Schätzfunktion nimmt typischerweise Werte zwischen 0 (Aus-Zustand) und 1 (Ein-Zustand) ein. Weist der für die aktuellen Werte ermittelte Wert der Schätzfunktion einen Abstand vom Wert 0 bzw. 1 auf, der einen gewissen Grenzabstand unterschreitet, wird eine Ein- bzw. Aus-Schaltanweisung erzeugt. Derartige Abstandswerte, bei deren Unterschreitung eine Schaltanweisung erzeugt wird, sind in beliebiger Weise einstellbar. Es sei angemerkt, daß nicht nur diskrete, sondern auch kontinuierliche Werte einer Zielgröße gesteuert werden können. Es können auch mehrere Zielgrößen, die ganz oder teilweise von den gleichen Einflußgrößen abhängen, mittels eines erfindungsgemäßen Schalterelements gesteuert werden. Es ist auch denkbar, mittels eines Schalterelements Zielgrößen zu steuern, die voneinander unabhängige Einflußgrößen besitzen.

Das erfindungsgemäße Schalterelement ermittelt in regelmäßigen Abständen oder kontinuierlich die Einflußgrößen, die die von ihm zu steuernde Zielgröße beeinflussen. Das Schalterelement merkt sich bei Benutzeraktionen, d.h. einer externen Angabe einer Schaltanweisung, unter welchen Umständen, d.h. bei welchen Werten die Einflußgrößen, diese geschehen sind. Auf der Grundlage dieser Eingaben versucht das System, das Steuerungsverhalten zu simulieren und nachzuahmen.

Vorteilhafte Ausgestaltungen des erfindungsgemäßen Schalterelements und des erfindungsgemäßen Verfahrens zur Steuerung des Schalterelements sind Gegenstand der Unteransprüche.

Zweckmäßigerweise erfolgt die Bestimmung und Speicherung des Wertes der wenigstens einen Einflußgröße der Zielgröße gleichzeitig mit der Eingabe einer externen Schaltanweisung. Das heißt, daß beispielsweise bei einer manuellen Betätigung des Schalterelements die zu diesem Zeitpunkt vorliegenden Werte der Einflußgrößen ermittelt werden. Hierdurch läßt sich in einfacher Weise bei einer ausreichenden Anzahl von Schalterbetätigungen eine Schätzfunktion mit einer geforderten Genauigkeit berechnen. Es ist ebenfalls denkbar, daß das Schalterelement zu einem Zeitpunkt zwischen zwei externen Schaltanweisungen automatisch die aktuellen Werte der Einflußgrößen bestimmt und diese zusammen mit dem aktuellen Schalterzustand abspeichert. Hierdurch kann eine ausreichende statistische Basis für die Generierung einer Schätzfunktion in schnellerer Weise erreicht werden.

Zweckmäßigerweise weist das Schalterelement Mittel zum automatischen oder extern vorgegebenen Umschalten von einem ersten Betriebszustand, in dem das Schalterelement ausschließlich durch externe Schaltanweisungen steuerbar ist, zu einem zweiten Betriebszustand, in dem es durch interne und/oder externe Schaltanweisungen steuerbar ist, auf. Während des ersten Betriebszustandes, d.h. während einer Lernphase, speichert das Schalterelement sämtliche von einem Benutzer eingegebenen externen Schaltanweisungen. Erst bei Umschalten auf den zweiten Betriebszustand, d.h. eine Automatikphase, wird eine generierte Schätzfunktion zur automatischen Steuerung des Schalterelements herangezogen. Das extern vorgegebene Umschalten kann mittels eines Schalters durchgeführt werden. Es ist auch möglich, das Schalterelement derart zu programmieren, daß dieses einen für ein Umschalten geeigneten Zeitpunkt selber ermittelt, beispielsweise indem überwacht wird, ob einen ausreichende statistische Basis zur Generierung einer Schätzfunktion vorliegt.

Zweckmäßigerweise weist das erfindungsgemäße Schalterelement wenigstens einen Ausgang auf, über welchen ein Ausgangssignal, insbesondere ein einer ausgeführten Schaltanweisung entsprechendes Signal, auf einen Eingang eines weiteren Schalterelements als Einflußgröße dieses weiteren Schalterelements gegeben werden kann. Hierdurch ist es möglich, die erfindungsgemäßen Schalterelemente in beliebiger Weise miteinander zu vernetzen. Hierbei können die Schalterelemente in Reihe, baumartig oder ringmäßig, d.h. gekoppelt miteinander verbunden werden. Ein Ausgangssignal eines Schalterelements wird hierbei auf einen der Eingänge eines anderen Schalterelements geschaltet. Insbesondere kann ein Schalterelement für beliebig viele andere Schalterelemente als Eingangssignalgeber dienen. Das Ausgangssignal eines Schalterelements dient also als Einflußgröße eines weiteren Schalterelements.

Gemäß einer bevorzugten Ausführungsform weist das erfindungsgemäße Schalterelement Mittel zur Einstellung eines Schwellwerts auf, über welchen eine bestimmte Korrelation der Schätzfunktion und einer zu generierenden internen Schaltanweisung einstellbar ist. Durch die Einstellung eines derartigen Schwellwertes ist es möglich, das Schalterelement "konservativ" oder auch "progressiv" einzusetzen. Bei konservativer Einstellung des Schwellwertes wird eine interne Schaltanweisung erst dann generiert, wenn der Wert der Schätzfunktion für die aktuellen Einflußgrößen sehr nah an den Funktionswerten 1 (entsprechend einem Einschalten) bzw. 0 (entsprechend einem Ausschalten) liegt.

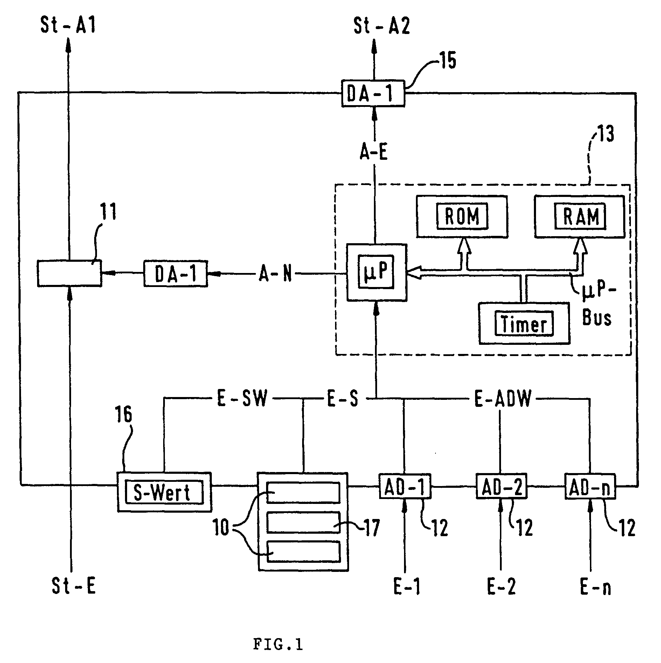

Die vorliegende Erfindung wird nun im einzelnen insbesondere anhand der Zeichnung beschrieben. In dieser zeigt die einzige Figur eine schematische Blockdarstellung einer Ausführungsform des erfindungsgemäßen Schalterelements.

Unter Bezugnahme auf die Figur weist das erfindungsgemäße Schalterelement einen Schalter 10 zur externen Eingabe von Schaltanweisungen auf. Über diesen Schalter 10 ist die Zielgröße über ein Lastschalter-Element 11 steuerbar bzw. ein- und ausschaltbar.

Das Lastschalter-Element verbindet bzw. unterbricht hierbei einen Stromsignaleingang St-E bezüglich eines Stromsignalausgangs St-Al. Dieses Signal St-A1 entspricht daher der zu steuernden Zielgröße.

Das Schalterelement weist ferner Eingänge 12 auf, über welche von Sensoren ermittelte Einflußgrößen E1 bis En der Zielgröße einlesbar sind. Die Eingänge E1 bis En können, wie im dargestellten Ausführungsbeispiel, jeweils mit AD-Wandlern AD-1 bis AD-n versehen sein. Bei Eingabe bereits digitalisierter Einflußgrößen sind derartige AD-Wandler selbstverständlich nicht notwendig.

Das Schalterelement weist ferner eine (mit gestrichelter Linie umgebene) Rechen- und Speichereinheit 13 auf. Diese umfaßt einen Mikroprozessor µP, einen ROM-Speicher, einen RAM-Speicher sowie einen Timer. Diese Elemente sind über einen µP-Bus miteinander verbunden. Im RAM-Speicher werden jeweils die Schaltanweisungen mit den ihnen entsprechenden Werten der Einflußgrößen gespeichert (n-Tupel). Der ROM-Speicher enthält die Programme zur Generierung einer Schätzfunktion aus den derart gespeicherten Werten, sowie die Programme zur Steuerung des Schalterelements.

Ferner umfaßt das Schalterelement einen zweiten Ausgang 15, über den ein Signal St-A2 beispielsweise auf ein weiteres Schalterelement übertragen werden kann. Das Ausgangssignal St-A2 kann hierbei als Einflußgröße eines zweiten Schalterelements dienen. Der Ausgang 15 kann mit einem DA-Wandler DA-1 ausgebildet sein.

Das Schalterelement ist ferner mit einer Auto-Taste 17 ausgebildet, über welche ein Umschalten von einem ersten Betriebszustand bzw. einer Lernphase in einen zweiten Betriebszustand bzw. eine Automatikphase möglich ist.

Im folgenden wird nun die Funktionsweise des erfindungsgemäßen Schalters beschrieben.

Zunächst werden während der Lernphase manuell Schaltanweisungen über den Schalter 10 eingeben. Die zu den Zeitpunkten von Schaltanweisungen an den Eingängen E-1 bis E-n anliegenden Werte der Einflußgrößen werden hierbei ebenfalls festgestellt. Daten-Tupel, bestehend aus der jeweiligen Schaltanweisung und den entsprechenden Werten der Einflußgrößen werden im RAM gespeichert. Wenn eine ausreichende Anzahl derartiger Daten-Tupel vorliegt, wird eine Schätzfunktion zur Darstellung der Schaltanweisung bzw. der durch diese zu steuernden Zielgröße in Abhängigkeit von den gespeicherten Einflußgrößen generiert. Eine derartige Schätzfunktion wird typischerweise zwischen den Funktionswerten 0 und 1 schwanken.

Hierbei bedeutet der Funktionswert 1 für eine bestimmte Einflußgrößenkonstellation ein "sicheres" Einschalten des Schalterelements, und entsprechend ein Funktionswert 0 ein "sicheres" Ausschalten des Funktionswerts. Selbstverständlich kann die Schätzfunktion auch zwischen beliebigen anderen Werten schwanken. Bei Vorliegen derartiger Einflußgrößen ist also davon auszugehen, daß ein Benutzer des Schalterelements sicher eine An- bzw. Aus-Schaltanweisung vorgenommen hätte. Mathematische Verfahren zur Generierung einer derartigen Schätzfunktion werden weiter unten beschrieben.

Wird das System nun durch Betätigung des Schalters 17 auf den zweiten Betriebszustand, d.h. die Auto-Phase geschaltet, führt das Schalterelement eine automatische Steuerung der Zielgröße St-A1 durch. Hierzu werden die Einflußgrößen E-1 bis E-n kontinuierlich bzw. in diskreten Abständen ermittelt. Für die jeweils vorliegenden Einflußgrößen, welche die n-Variablen der Schätzfunktion darstellen, wird der entsprechende Wert der Schätzfunktion bestimmt. Liegt dieser Schätzfunktionswert nahe genug am Wert 1 bzw. 0, wird eine entsprechende Ein- bzw. Aus-Schaltanweisung vom Mikroprozessor erzeugt und an das Lastschalter Element gegeben. Die Korrelation bzw. geforderte Nähe des Schätzfunktionswerts zu den Funktionswerten 1 oder 0 ist mittels des Schwellwertschalters 16 einstellbar. Über die Voreinstellung des Schwellwertes ist es möglich, die Schaltcharakteristik individuell, nämlich eher konservativ oder progressiv zu regeln. Der Schwellwert definiert hierbei eine Linie zwischen den Funktionswerten 0 und 1. Es sind auch komplexe Schätzfunktionen bzw. Schwellwertfunktionen denkbar, bei denen Beispielsweise mehrere Funktionswerte ermittelt und miteinander korreliert werden.

Im folgenden werden mathematische Verfahren angegeben, mittels derer Schätzfunktionen erzeugbar sind. Jedes mathematische Verfahren muß hierbei aus einer Menge von Stichproben bzw. Messungen, welche aus den Einflußgrößen bzw. einer Zielgröße bestehen, eine Schätzfunktion generieren.

Der Zustand zum Zeitpunkt einer Schaltanweisung wird durch die Menge der Einflußgrößen beschrieben, die entweder kontinuierliche oder diskrete Werte annehmen können. Als externe Parameter, welche über die Eingänge E-1 bis E-n in das System eingegeben werden, sind beispielsweise Temperatur, Luftfeuchtigkeit, Helligkeit, Eintritt eines Ereignisses oder Eingang eines Ausgangssignals eines weiteren Schalterelements zu nennen.

Das System kann ferner interne, timer-gesteuerte Parameter, beispielsweise Fourier-Basisfunktionen (trigonometrische Funktionen) erzeugen. Die Zeit wird hierbei relativ gemessen, d.h. t = 0 ist ein beliebiger Zeitpunkt. Dies hat den Vorteil, daß von außen keine Uhr gestellt werden muß. Die verschiedenen Einflußgrößen sind im folgenden mit $e_i$, i = 1 ... n bezeichnet. Einem Satz bzw. Tupel von Einflußgrößen $e_i$ ist eine Zielgröße b zugeordnet. Es sei angenommen, daß j Stichproben bzw. Schaltanweisungen im System gespeichert sind. Jede Stichprobe setzt sich also zusammen aus einem Zielparameterwert b und n Einflußgrößen $a_i$.

Es existieren nun diverse Möglichkeiten zur Berechnung einer Schätzfunktion auf dieser Grundlage.

Es ist beispielsweise möglich, eine lineare Kombination der Zustandsparameter der Form

$$S := \Sigma\ x_i a_i,\ i=1,...,n$$

zu erzeugen. Hierbei stellen die $x_i$ die Gewichte der linearen Schätzfunktion dar.

Es ist aber auch möglich, lineare Kombinationen von nicht-linearen Transformationen der Zustandsparameter oder auch nicht-lineare Kombinationen nicht-linearer Transformationen der Zustandsparameter zu erzeugen.

Den Verfahren ist gemeinsam, daß auf der Basis eines Optimalitätskriteriums geschätzt wird, d.h. die Zustandsparameter sollen derart miteinander kombiniert werden, daß die Zielgröße möglichst gut geschätzt wird. Hier bietet sich z.B. die Methode der kleinsten Quadrate (lineare Regressionsanalyse) an. Hierzu müssen die Koeffizienten $x_i$ derart gewählt werden, daß die Summe

$$\Sigma\|\ S_j\text{-}b_j\|,\ j=1,...,m$$

minimal wird. Hierbei bezeichnen die Doppelstriche die Euklidsche Norm.

Es sind jedoch auch Splineinterpolationsverfahren sowie Verfahren der neuronalen Netze, oder aber auch Methoden der Fuzzy-Logic oder Varianzreduzierende Verfahren denkbar. Geeignete Verfahren sind in der älteren Patentanmeldung 19600694.5 des Anmelders beschrieben. Diese Verfahren werden ausdrücklich zum Gegenstand auch der vorliegenden Anmeldung gemacht.

Im folgenden sollen nun bevorzugte Einsatzbereiche für das erfindungsgemäße Schalterelement angegeben werden.

Ganz allgemein können die erfindungsgemäßen Schalterelemente überall dort eingesetzt werden, wo beispielsweise auf intelligente bzw. lernende Weise Zeitschaltuhren ersetzt werden sollen. Hierbei müssen Voreinstellungen durch einen Installateur oder einen Benutzer nicht vorgenommen werden.

Die Verwendung der Schalterelemente erweist sich dort als vorteilhaft, wo Vorgänge auf komplexe Art und Weise gesteuert werden müssen, d.h. wenn zwei oder mehr meist voneinander unabhängige Eingangsparameter eine Zielgröße bestimmen (beispielsweise Temperatur, Helligkeit oder Luftfeuchtigkeit bei einer Gartensprenganlage) und sich in Bezug auf die Steuerung widersprechen bzw. stark unterschiedlich gewichtet werden.

Ferner erweist sich die Verwendung der Schalterelemente dort als nützlich, wo die Steuerung für einen Benutzer nicht sofort durchschaubar ist, weil z.B. nicht an alle Einflüsse gedacht wird, z.B. bei der Einrichtung von zeitgesteuerten Diensten in Betriebssystemen.

Auch zum Ausgleich der Interessen z.B. mehrerer Mitarbeiter eines Büros kann das erfindungsgemäße Schalterelement vorteilhaft verwendet werden. Als Beispiel sei hier die Jalousie-Steuerung in einem Büro mit mehreren Mitarbeitern angegeben, die verschiedene Auffassungen bezüglich der Wärme bzw. Sonneneinstrahlung haben.

Auch ist es, insbesondere bei einer Vernetzung einer Anzahl der erfmdungsgemäßen Schalterelemente, möglich, Vorgänge mit komplexen Nebenbedingungen anzustoßen bzw. zu steuern. Hier sei in der Haustechnik beispielsweise auf intelligente bzw. vernetzte Gebäudeeinheiten hingewiesen.

Bevorzugte Anwendungen der erfindungsgemäßen Schalterelemente sind die Steuerung von Kaffeemaschinen sowie von Fernsehern und Videorecordern. Es können hier herkömmliche Schaltuhren ersetzt werden. Bei der Steuerung von Fernsehern und Videorecordern kann, insbesondere bei Kennungen gewisser Sendungen, eine Vorauswahl bzw. eine Filterung vorgenommen werden.

Auch die Steuerung von Waschmaschinen oder Anrufbeantwortern bzw. Telefonanlagen ist mit den erfindungsgemäßen Schalterelementen erleichtert.

Im Computerbereich sind die erfindungsgemäßen Schalterelemente verwendbar. Hier eignen sich insbesondere als Softwaremodule ausgebildete Schalterelemente. Es kann beispielsweise jeder zeitgesteuerte Betriebssystem-/Anwendungsprogrammdienst intelligent von einem Schalterelement ersetzt werden (Software-Zeitschaltuhr). Es können Datensavefunktionen oder Updates von Benutzerprofilen gesteuert werden. Ferner ist z.B. das Anstoßen einer End-Of-Day-Prozedur, beispielsweise nur an bestimmten Tagen, möglich. Üblicherweise ist das Einrichten einer Betriebssystemumgebung mit verschiedenen Diensten sehr aufwendig. Ein die erfindungsgemäßen Zeitschalter verwendendes lernendes System erkennt automatisch Ausnahmeregelungen, Besonderheiten oder einfache, beispielsweise auf Wochentage bezogene Regelmäßigkeiten, ohne das diese vom Benutzer konkret eingegeben werden müssen.

Beispielsweise kann ein Schalterelement in einer Client-Server Umgebung im Server sitzen und einem Bandgerät zugeordnet sein. Es lernt, wann und unter welchen Bedingungen der Benutzer die Bandsicherung anstößt und führt später diese Arbeiten selbständig aus. Durch eine kaskadierte Zusammenschaltung von Schalterelementen auf Betriebssystemebene können nach einer Lemphase weitere Betriebssystemvorgänge ausgelöst werden, dies unter Berücksichtigung weiterer Nebenbedingungen, wobei dies mittels weiterer Eingänge in nachgeordneten Schalterelementen realisiert wird

Wie einleitend beispielhaft angegeben, sind die erfindungsgemäßen Schalterelemente in der Bewässerungstechnik verwendbar. Als externe Eingangsgrößen sind hierbei insbesondere Außentemperatur, Helligkeit und Luftfeuchtigkeit zu nennen. Als interne Eingangsgröße ist die Zeit verwendbar. Zur Steuerung des Systems erweist es sich ferner als vorteilhaft, beispielsweise eine Rückkopplungs-Eingangsgröße, beispielsweise einen Feuchtigkeitsfühler, der die Feuchtigkeit des Bodens mißt, vorzusehen.

Auch zur Steuerung eines Heißwasserspeichers sind die Schalterelemente verwendbar. Ohne Notwendigkeit einer Einstellung durch einen Benutzer erstellt das Schalterelement laufend anhand des "nachgefragten" Warmwassers ein Nutzungsprofil und hält nach der Lernphase entsprechend warmes Wasser im Vorrat. Entsprechend dem vom Benutzer erlernten Verhalten hält der Speicher beispielsweise entsprechend seinem Fassungsvermögen heißes Wasser vorrätig, welches tagsüber verstärkt und in den späten Nachtstunden weniger bzw. nicht mehr erzeugt wird. Hierdurch sind große Energieeinsparungen möglich. Als externe Eingangsgröße ist hier die Wassernachfrage zu nennen. Interne Eingangsgröße ist hierbei wieder die Zeit. Als Rückkopplungs-Eingangsgröße sind Wassertemperatur und Wasserstand vorteilhaft verwendbar. Zielgröße ist hierbei die Entscheidung, ob und wieviel warmes Wasser erzeugt werden soll. Es wird ein zeitabhängiges Nutzungsprofil aufgebaut. Eine werkseitige Voreinstellung eines derartigen Nutzungsprofils ist denkbar. Auch ein Wasserboiler ist mit dem erfindungsgemäßen Schalterelement ausrüstbar. Als Einflußgrößen sind hier beispielsweise der Wasserdurchlauf (mittels eines Sensors überwachbar), die erreichte Temperatur und die interne Zeit denkbar. Zielgröße ist hier die Entscheidung, ob geheizt werden soll oder nicht.

Auch ein Einsatz der erfindungsgemäßen Schalterelemente bei Mikromaschinen bzw. Mikropumpen ist denkbar. Mikromaschinen sind im allgemeinen von außen nicht problemlos einstellbar, da hier im Verhältnis zur Maschine sehr große Schalter benötigt werden. Es ist denkbar, daß erfindungsgemäße Schalterelemente eingesetzt werden, wobei etwa die Lern- bzw. Automatikphase von außen durch unterschiedliches Licht, spezielle akustische Signale usw. vorgegeben werden kann.

Der erfindungsgemäße Schalter ist in der Robotik, beispielsweise auf dem Spielzeugsektor, einsetzbar. Bisher war es üblich, Systemspielzeug-Bauteile (d. h. Einzelbausteine zusammensetzbarer Systeme) am Computer vorab zu programmieren, beispielsweise im Sinne einer expliziten Vorgabe eines Verhaltens. Derart programmierte Bauteile werden in Spielzeug-Konfigurationen eingesetzt und steuern auf der Basis angeschlossener Sensoren das Spielverhalten bzw. -environment (beispielsweise führt ein ausreichend intensives Signal eines in einem Spielzeugauto vorgesehenen Radarsensors - verursacht durch die Nähe zu einem Objekt- zu einem Anhalten des Autos).

Erfindungsgemäß ist es möglich, das Spielzeugenvironment aus Schalterelementen zusammenzusetzen. Beispielsweise wird jedem Bein eines Robotik-Tieres ein Schalterelement zugeordnet, welches eine Bewegung des jeweiligen Beines steuert. Als Einflußgrößen der Schalterelemente bereitstellende Elemente sind zusätzlich angebrachte Sensoren (Entfernungs-, Licht-, Temperatursensoren oder auch Kameras) verwendbar. Als weitere Einflußgrößen sind die interne Zeit sowie die Ausgänge der übrigen Schalterelemente denkbar. Zielgröße bzw. Zielfunktion z.B. eines Schalterelements ist beispielsweise die Steuerung eines das Bein steuernden Motors bzw. Stellmotors.

Es ist beispielsweise denkbar, daß sich das Spielzeug-Tier während einer ersten Lernphase willkürlich bewegt. Über einen dem Tier zugeordneten Steuerschalter kann ein Benutzer eingeben, ob das aktuelle Verhalten adäquat ist oder nicht. Beispielsweise bewegt sich das Tier auf ein Hindernis zu. Durch betätigen des Steuerschalters (bei einer gewissen Entfernung des Tieres von dem Hindernis) wird eingegeben, daß eine weitere Annäherung an das Hindernis nicht adäquat ist. Ähnliches gilt beispielsweise bei Einschalten eines Lichts. Durch Betätigung des Steuerschalters kann eingegeben werden, daß in diesem Fall eine Bewegung zu dem Licht hin zu erfolgen hat. Dadurch, daß die einzelnen Schalterelemente auf der Basis der Umgebungs-Einflußgrößen und der Ausgangssignale der übrigen Schalterelemente gesteuert werden, ist es möglich, die jeweiligen Einflüsse zu gewichten. Mit der Zeit erlernt das Spielzeug-Tier sich in der vom Benutzer gewünschten Weise zu "verhalten".

Als vorteilhaftes Einsatzgebiet der Schalterelemente erweist sich auch die Fernseh-Kindersteuerung. Bei dem Einsatz eines Schalterelementes in einem Fernseher zur Freischaltung nur erwünschter Sendungen etwa für Kinder werden über eine Lernphase hinweg nur diejenigen Sendungen angeschaut, die kindgerecht sind. Mit zunehmendem Alter der Kinder werden die Grenzen immer weiter gesteckt, was sich beispielsweise darin ausdrücken kann, daß die Ausschaltzeiten des gesteuerten Fernsehers später liegen. Nach der Lernphase entfällt die Kontrolle, wie lange die Kinder den Femseher nutzen dürfen bzw. welche Sendungen sie anschauen dürfen. Als externe Eingangsgröße kann hier beispielsweise der Typ der Sendung (Nachrichten, Sport, Spielfilm) und/oder irgendeine Klassifikation der Sendung (beispielsweise Freigegeben ab 16 Jahre) Verwendung finden. Derartige Klassifikationen oder Kennungen werden bereits heute als aufgeschaltete Signale zu den Sendungen mitübertragen. Als interne Eingangsgröße kann wiederum die Zeit verwendet werden. Als Rückkopplungsgröße ist beispielsweise die bisherige Nutzungsdauer der letzten 24 Stunden verwendbar. Zielgröße ist das An- bzw. Ausschalten des Fernsehers. Es wird ein Zeit- und Klassifikations-abhängiges Nutzungsprofil aufgebaut.

Bei einem Einsatz eines Schalterelements bei der Video-Aufnahmesteuerung lernt das Schalterelement während einer Lernphase, welche Sendungen

11        **EP 0 991 988 B1**        12

aufgenommen werden sollen und welche nicht. Es entwickelt dann aufgrund des Gelernten ein Nutzungsprofil, woraufhin alle Sendungen daraufhin geprüft werden, ob sie in ihrem Profil den bisher gewählten Sendungen entsprechen. Hierdurch kann ein aufwendiges Durchsuchen unübersichtlicher Programmzeitschriften entfallen. Externe Eingangsgrößen sind hierbei der Typ der Sendung bzw. der Fernsehkanal oder auch eine Klassifikation der Sendung. Zielgröße ist eine Entscheidung, ob oder nicht eine Sendung aufgenommen werden soll.

Die erfindungsgemäßen Schalterelemente können auch bei Internet-Suchmaschinen verwendet werden, beispielsweise um mit Kennungen oder Klassifizierungen versehene oder versehbare Internetseiten auszuwählen (Internetseiten können beispielsweise benutzerseitig dadurch mit einer Klassifikation vorgesehen werden, daß ihr Inhalt auf Stichwörter untersucht wird, die bestimmten Kategorien zugeordnet sind).

Die herkömmlich bei Suchmaschinen verwendete Stichwortsuche weist eine Reihe von Nachteilen auf. So müssen Stichworte bzw. Einstellungen oder Voreingaben bei jeder Benutzung neu eingegeben werden, eine automatische Präsentation von Seiten, insbesondere unter Berücksichtigung eines komplexen Benutzerwunschprofils, erfolgt nicht. Auch erweist sich die Suche nach sich widersprechenden Suchbegriffen als problematisch, da beispielsweise jeder Suchbegriff mit der gleichen Gewichtung in die Suche eingeht.

Unter Verwendung des erfindungsgemäßen Schalterelements ist es nun möglich, einem Internetbenutzer diejenigen Internetseiten zu präsentieren, die seinen Interessen oder üblichen Suchmustern entsprechen. Ruft ein Internetbenutzer beispielsweise die Internetseiten eines Unternehmens ab, werden die aus der Gesamtheit der Seiten konkret selektierten bzw. angeschauten Dokumente klassifiziert (Beispiele für Klassifikationen: Kultur, Sport, Wirtschaft, ...). Die konkrete Selektion eines Dokuments entspricht hierbei einer externen Schaltanweisung. Die Klassifizierung kann beispielsweise dadurch erfolgen, daß das gesamte Dokument auf Begriffe oder Schlüsselworte untersucht wird, die bestimmten Klassifikationen bzw. Informationsoberbegriffen zugeordnet sind. Die Menge der Klassifikationen entspricht hierbei der Menge der Einflußgrößen.

Die nicht selektierten Dokumente (bzw. eine Menge bzw. Untermenge aus diesen Dokumenten) werden den selektierten Dokumenten gegenübergestellt. Es wird nun eine Zielfunktion (0/1-Funktion) gebildet, wobei einem selektierten Dokument eine Eins, und einem nicht selektierten Dokument eine Null zugeordnet ist.

Mit einer derartigen Klassifizierung der selektierten Dokumente ist angebbar, inwieweit die Klassifikationen oder Einflußgrößen bzw. ihre Kombinationen für einen Benutzer relevant ist. Hieraus ergibt sich unter anderem, in welcher Weise die Klassifikationen in geeigneter Weise zu gewichten sind. Nach einer Anlaufphase ist das System in der Lage, einem Benutzer unter Berücksichtigung seines bisherigen Suchverhaltens relevante Internetseiten bzw. Dokumente zu präsentieren.

Erfindungsgemäße Schalterelemente können in verschiedene Varianten ausgeführt sein. Sie können als Standalone bzw. als vorgeschaltete Hardware, d.h. beispielsweise als Modul, das einem Gerät vorgeschaltet wird, realisiert sein. Auch als integrierte Hardware, beispielsweise einem auf einer Platine fest verdrahteten Chip, können Schalterelemente ausgeführt sein.

Ebenfalls denkbar sind softwareartig ausgeführte Schalterelemente. Sie können z.B. auf Betriebssystemebene als eigenständige Prozesse oder in Subbetriebssystemen (JAVA Systemumgebung) als Threads aktiv sein. Als vorgeschaltetes Softwaremodul kann das Schalterelement explizit vom Benutzer ansprechbar sein, d.h. die Ein- und Ausgänge sind vom Benutzer einzelnen Betriebssystemen oder Anwendungsprogrammfunktionen zuordnenbar. Als integriertes Softwaremodul ist das Schalterelement nicht direkt ansprechbar, sondern mit seinen Ein- und Ausgängen fest einzelnen Betriebsystemen oder Programmfunktionen zugeordnet.

Schließlich sind auch Hybrid-Schalterelemente, also als Hardware realisierte Softwaremodule denkbar, welche beispielsweise als Chips dem Benutzer zugänglich oder fest dem Betriebssystem oder Programmfunktionen zugeordnet sind.

Es ist denkbar, die erfindungsgemäßen Schalterelemente derart zu steuern, daß Eingaben eines Benutzers nur während einer Lernphase möglich sind, so daß in der anschließenden automatischen Phase eine Selbststeuerung des mit dem Schalterelement ausgebildeten Geräts erfolgt. Es ist jedoch ebenfalls möglich, auch während einer derartigen automatischen Phase weitere Eingaben zuzulassen, beispielsweise zur Erzielung einer kontinuierlichen Anpassung der Gewichtung der Einflußgrößen. Das Umschalten zwischen den genannten Phasen könnte ebenfalls automatisch erfolgen, beispielsweise bei Erreichen einer gewissen statistischen Güte der bisherigen Eingaben. Schließlich ist die Ausbildung von einer Betriebsphase denkbar, in welcher gleichzeitig die Funktion der Lernphase und der automatischen Phase realisiert sind.

Eine automatische Bestimmung bzw. Anpassung des zeitlichen Feinheitsgrades (d.h. die Häufigkeit der Überprüfung der Schätzfunktion) kann dadurch erfolgen, daß über die Ermittlung der relevanten Fourier-Basisfunktionen die minimale zu schaltende Zeiteinheit bestimmt wird.

Es ist ebenfalls denkbar, eine "evolutionäre" Auswahl der relevanten Einflußgrößen vorzusehen. Beispielsweise nachdem sich mit der Zeit herausstellt, daß gewisse (voreingestellte oder vom Benutzer gewählte) Einflußgrößen tatsächlich keinerlei Einfluß auf das Schaltverhalten haben, können diese erkannt und aussortiert werden, sowie möglicherweise (vorzugsweise mittels eines automatischen Verfahrens) durch neue Einflußgrößen ersetzt werden. Es ist

7

in ähnlicher Weise ebenfalls denkbar, die Zahl der Einflußgrößen mit der Zeit zu erhöhen.

Es sei angemerkt, daß der Schalter 10 sowohl als Ein/Aus Element als auch als kontinuierlicher Regler (beispielsweise als Drehregler) ausgebildet sein kann.

Es ist ebenfalls denkbar, die erfindungsgemäßen Schalterelemente rückgekoppelt zu verwenden, d. h. eine Ausgabe bzw. Schaltgröße eines Schalterelements diesem als Einflußgröße wieder zuzuführen (beispielsweise über ein Relais). Hierdurch können Reglertätigkeiten realisiert werden

Gegenüber neuronalen Netzen ergibt sich durch Verwendung der erfindungsgemäßen Schalterelemente der Vorteil, daß zeitlich abhängige Vorgänge erfaßt und ausgewertet werden können.

## Patentansprüche

1. Schalterelement mit

   - Mitteln (10) zur Eingabe von externen Schaltanweisungen zur diskreten oder kontinuierlichen Steuerung wenigstens einer Zielgröße,
   - Mitteln (11) zum Ausführen der Schaltanweisungen,
   - wenigstens einem Eingang (12) sowie Mitteln zur diskreten oder kontinuierlichen Erfassung des Wertes wenigstens einer durch ein Meß- oder ein Steuersignal repräsentierten Einflussgröße der Zielgröße, wobei die wenigstens eine Einflussgröße eine die Zielgröße beeinflussende Größe darstellt,
   - und Mitteln (13) zum Speichern des Wertes der wenigstens einen Einflußgröße bezogen auf die Eingabe der externen Schaltanweisungen,

   **gekennzeichnet durch**

   - Mittel (13) zur Erzeugung von internen, timergesteuerten Basisfunktionen, zur Berechnung und Speicherung einer Schätzfuktion zur Darstellung von internen Schaltanweisungen in Abhängigkeit von der wenigstens einen gespeicherten Einflussgröße unter Berücksichtigung der timergesteuerten Basisfunktionen sowie zur Generierung von internen Schaltanweisungen zur Steuerung der Zielgröße auf der Grundlage der Schätzfunktion.

2. Schalterelement nach Anspruch 1, **dadurch gekennzeichnet, daß** die Mittel (13) derart ausgebildet sind, daß sie die Werte der wenigstens einen Einflußgröße zum Zeitpunkt einer Schaltanweisung bestimmen und speichern.

3. Schalterelement nach Anspruch 1 oder 2, **gekennzeichnet durch** Mittel (17) zum automatischen oder extern vorgegebenen Umschalten von einem ersten Betriebszustand, in dem das Schalterelement ausschließlich **durch** externe Schaltanweisungen steuerbar ist, zu einem zweiten Betriebszustand, in dem es **durch** interne und/oder externe Schaltanweisungen steuerbar ist.

4. Schalterelement nach einem der Ansprüche 1 bis 3, **gekennzeichnet durch** wenigstens einen Ausgang (15), über welchen ein Ausgangssignal, insbesondere ein einer ausgeführten Schaltanweisung entsprechendes Signal, auf einen Eingang (12) eines weiteren Schalterelements als Einflußgröße diesem weiteren Schalterelement gegeben werden kann.

5. Schalterelement nach einem der Ansprüche 1 bis 4, **gekennzeichnet durch** Mittel (16) zur Einstellung eines Schwellwertes, über welchen eine bestimmte Korrelation der Schätzfunktion und einer zu generierenden internen Schaltanweisung einstellbar ist.

6. Verfahren zur Steuerung eines Schalterelementes mit folgenden Schritten:

   - Eingabe von externen Schaltanweisungen zur diskreten oder kontinuierlichen Steuerung wenigstens einer Zielgröße,
   - Erfassung und Speicherung des Wertes wenigstens einer durch ein Meß- oder Steuersignal repräsentierten Einflußgröße der Zielgröße bezogen auf die jeweiligen externen Schaltanweisungen, wobei die wenigstens eine Einflussgröße eine die Zielgröße beeinflussende Größe darstellt,

   **gekennzeichnet durch**
   die weiteren Schritte der

   - Erzeugung von internen, timergesteuerten Basisfunktionen,
   - Berechnung und Speicherung einer Schätzfunktion zur Darstellung von internen Schaltanweisungen in Abhängigkeit von der wenigstens einen Einflussgröße unter Berücksichtigung der timergesteuerten Basisfunktionen,
   - Generierung von internen Schaltanweisungen zur Steuerung der Zielgröße auf der Grundlage der Schätzfunktion.

7. Verfahren nach Anspruch 6, **dadurch gekennzeichnet, daß** die Erfassung der Werte der wenigstens einen Einflußgröße gleichzeitig mit der Eingabe der externen Schaltanweisungen durchgeführt wird.

8. Verfahren nach Anspruch 6 oder 7, **dadurch ge-**

**kennzeichnet, daß** während eines ersten Betriebszustandes das Schalterelement ausschließlich durch externe Schaltanweisungen gesteuert wird, und während eines zweiten Betriebszustandes das Schalterelement durch interne und/oder externe Schaltanweisungen gesteuert wird.

9. Verwendung wenigstens eines Schalterelements nach einem der Ansprüche 1 bis 5, insbesondere gemäß einem Verfahren und einem der Ansprüche 6 bis 8 zur Steuerung eines Haushaltsgeräts, insbesondere eines Lichtschalters, einer Kaffeemaschine, einer Alarmanlage, einer Jalousie, einer Heizungsanlage, eines Gerätes der Unterhaltungselektronik, insbesondere eines Fernsehers oder eines Videorecorders, einer Waschmaschine, eines Anrufbeantworters, eines Heißwasserspeichers oder eines Boilers.

10. Verwendung wenigstens eines Schalterelements nach einem der Ansprüche 1 bis 5, insbesondere gemäß einem Verfahren und einem der Ansprüche 6 bis 8 zur Steuerung einer Bewässerungsanlage.

11. Verwendung wenigstens eines Schalterelements nach einem der Ansprüche 1 bis 5, insbesondere gemäß einem Verfahren und einem der Ansprüche 6 bis 8 zur Steuerung eines Computers, insbesondere eines Computer-Betriebssystems, oder einer Internet-Suchmaschine.

12. Verwendung wenigstens eines Schalterelements nach einem der Ansprüche 1 bis 5, insbesondere gemäß einem Verfahren und einem der Ansprüche 6 bis 8 zur Steuerung einer Mikromaschine oder eines Robotik-Bauteils, insbesondere eines Robotik-Kinderspielzeugs.

**Claims**

1. A switching element with

   - means (10) for input of external switching instructions for discrete or continual control of at least one target variable,
   - means (11) for carrying out the switching instructions,
   - at least one input (12) and means for discrete or continual detection of the value of at least one influence variable of the target variable represented by a measurement or control signal, the at least one influence variable being a variable influencing the target variable,
   - and means (13) for storing the value of the at least one influence variable in relation to the input of the external switching instructions,

   **characterised by**

   - means (13) for the generation of internal, timer controlled base functions for calculation and storage of an estimation function for the representation of internal switching instructions dependent on the at least one stored influence variable taking into account the timer controlled base functions, and for the generation of internal switching instructions for controlling the target variable on the basis of the estimation function.

2. A switching element according to claim 1, **characterised in that** the means (13) are designed so that they determine and store the values of the at least one influence variable at the point in time of a switching instruction.

3. A switching element according to claims 1 or 2, **characterised by** means (17) for automatic or externally-specified switching from a fist operating state, in which the switching element is exclusively controllable by external switching instructions, to a second operating state, in which it is controllable by internal and/or external switching instructions.

4. A switching element according to any of claims 1 to 3, **characterised by** at least one output (15) via which an output signal, especially the signal corresponding to a switching instruction which has been carried out, can be applied to one input (12) of a further switching element as an influence variable of this further switching element.

5. A switching element according to any of claims 1 to 4, **characterised by** means (16) for setting a threshold value, via which a certain correlation of the estimation function and an internal switching instruction which is to be generated can be set.

6. A process for control of a switching element with the following steps:

   - input of external switching instructions for discrete or continual control of at least one target variable,
   - detection and storage of the value of at least one influence variable of the target variable, represented by a measurement or control signal, the at least one influence variable being a variable influencing the target variable,

   **characterised by**
   the further steps of

- generation of internal, timer controlled base functions,
- calculation and storage of an estimation function for representation of internal switching instructions dependent on the at least one influence variable taking into account the timer controlled base functions,
- generation of internal switching instructions for control of the target variable on the basis of the estimation function.

7. A process according to claim 6, **characterised in that** detection of the values of the at least one influence variable is carried out at the same time as the input of the external switching instructions.

8. A process according to claim 6 or 7, **characterised in that** during a first operating state, the switching element ist exclusively controlled by external switching instructions, and during a second operating state the switching element is controlled by internal and/or external switching instructions.

9. The use of at least one switching element according to any of claims 1 to 5, especially according to a process according to any of claims 6 to 8 for the control of a household appliance, especially a light switch, a coffee machine, an alarm system, a roller blind, a heating system, an electronic entertainment system, especially a television or a video recorder, a washing machine, an answerphone, a hot water tank or a boiler.

10. The use of at least one switching element according to any of claims 1 to 5, especially according to a process according to any of claims 6 to 8 for the control of an irrigation system.

11. The use of at least one switching element according to any of claims 1 to 5, especially according to a process according to any of claims 6 to 8 for the control of a computer, especially a computer operating system or an Internet search engine.

12. The use of at least one switching element according to any of claims 1 to 5, especially according to a process according to any of claims 6 to 8 for the control of a micro-machine or a robotic component, especially a robotic toy.

**Revendications**

1. Élément de commutation comportant :

   - des moyens (10) pour entrer des instructions de commutation externes pour la commande discrète ou continue d'au moins un paramètre cible,

   - des moyens (11) pour exécuter les instructions de commutation,

   - au moins une entrée (12) ainsi que des moyens pour la détection discrète ou continue de la valeur d'au moins un paramètre d'influence, représenté par un signal de mesure ou de commande, du paramètre cible, ledit au moins un paramètre d'influence représentant un paramètre qui influence le paramètre cible,

   - et des moyens (13) pour mémoriser la valeur dudit au moins un paramètre d'influence par rapport à l'entrée des instructions de commutation externes,

   **caractérisé par** :

   - des moyens (13) pour engendrer des fonctions de base internes commandées par horloge, pour calculer et pour mémoriser une fonction d'estimation pour représenter des instructions de commutation internes en fonction dudit au moins un paramètre d'influence mémorisé en prenant en compte les fonctions de base commandées par horloge, ainsi que pour générer des instructions de commutation internes pour commander le paramètre cible en se basant sur la fonction d'estimation.

2. Élément de commutation selon la revendication 1, **caractérisé en ce que** les moyens (13) sont réalisés de manière à définir et à mémoriser les valeurs dudit au moins un paramètre d'influence à l'instant d'une instruction de commutation.

3. Élément de commutation selon l'une ou l'autre des revendications 1 et 2, **caractérisé par** des moyens (17) pour la commutation automatique ou imposée depuis l'extérieur pour passer d'un premier état de fonctionnement dans lequel l'élément de commutation est susceptible d'être commandé exclusivement par des instructions de commutation externes à un deuxième état de fonctionnement dans lequel il est susceptible d'être commandé par des instructions de commutation internes et/ou externes.

4. Élément de commutation selon l'une des revendications 1 à 3, **caractérisé par** au moins une sortie (15) via laquelle un signal de sortie, en particulier un signal correspondant à une instruction de commutation exécutée, peut être fourni à une entrée (12) d'un autre élément de commutation à titre de paramètre d'influence pour cet autre élément de commutation.

**5.** Élément de commutation selon l'une des revendications 1 à 4, **caractérisé par** des moyens (16) pour régler une valeur seuil au-dessus de quelle peut être établie une corrélation déterminée de la fonction d'estimation et d'une instruction de commutation interne à générer.

**6.** Procédé pour commander un élément de commutation, comprenant les étapes suivantes :

- on entre des instructions de commutation externes pour la commande discrète ou continue d'au moins un paramètre cible,
- on détecte et on mémorise la valeur d'au moins un paramètre d'influence, représenté par un signal de mesure ou de commande, du paramètre cible par rapport aux instructions de commutation externes respectives, ledit au moins un paramètre d'influence représentant un paramètre qui influence le paramètre cible,

**caractérisé par** les autres étapes suivantes :

- on génère des fonctions de base internes commandées par horloge,
- on calcule et on mémorise une fonction d'estimation pour représenter des instructions de commutation internes en fonction dudit au moins un paramètre d'influence en prenant en compte les fonctions de base commandées par horloge,
- on génère des instructions de commutation internes pour commander le paramètre cible en se basant sur la fonction d'estimation.

**7.** Procédé selon la revendication 6, **caractérisé en ce que** l'on exécute la détection des valeurs dudit au moins un paramètre d'influence simultanément avec l'entrée des instructions de commutation externes.

**8.** Procédé selon l'une ou l'autre des revendications 6 et 7, **caractérisé en ce que** pendant un premier état de fonctionnement, l'élément de commutation est commandé exclusivement par des instructions de commutation externes, et pendant un deuxième état de fonctionnement, l'élément de commutation est commandé par des instructions de commutation internes et/ou externes.

**9.** Utilisation d'au moins un élément de commutation selon l'une des revendications 1 à 5, en particulier suivant un procédé selon l'une des revendications 6 à 8 pour commander un appareil ménager, en particulier un interrupteur de lumière, une cafetière électrique, une installation d'alarme, un store, une installation de chauffage, un appareil du domaine électronique grand public, en particulier un appareil téléviseur ou un magnétoscope, une machine à laver, un répondeur téléphonique, un réservoir à eau chaude ou un chauffe-eau.

**10.** Utilisation d'au moins un élément de commutation selon l'une des revendications 1 à 5, en particulier suivant un procédé selon l'une des revendications 6 à 8 pour commander une installation d'arrosage.

**11.** Utilisation d'au moins un élément de commutation selon l'une des revendications 1 à 5, en particulier suivant un procédé selon l'une des revendications 6 à 8 pour commander un ordinateur, en particulier un système d'exploitation d'un ordinateur ou un moteur de recherche sur Internet.

**12.** Utilisation d'au moins un élément de commutation selon l'une des revendications 1 à 5, en particulier suivant un procédé selon l'une des revendications 6 à 8 pour commander une micro-machine ou un composant de robotique, en particulier un jouet d'enfant robotisé.

FIG.1